# EUROPÄISCHE PATENTSCHRIFT

(11) **EP 3 867 666 B1**
(45) Veröffentlichungstag und Bekanntmachung des Hinweises auf die Patenterteilung: **27.03.2024**
(21) Anmeldenummer: 19789928.9
(22) Anmeldetag: 15.10.2019
(51) Int. Cl.: G01S 17/00, G01S 7/48

(54) **VERFAHREN ZUR ERFASSUNG WENIGSTENS VON PARTIKELZUSAMMENSETZUNGEN IN EINEM ÜBERWACHUNGSBEREICH MIT EINER OPTISCHEN DETEKTIONSVORRICHTUNG UND DETEKTIONSVORRICHTUNG**
METHOD FOR DETECTING AT LEAST PARTICLE COMPOSITIONS IN A MONITORING REGION BY MEANS OF AN OPTICAL DETECTION DEVICE, AND DETECTION DEVICE
PROCÉDÉ DE DÉTECTION D'AU MOINS DES COMPOSITIONS DE PARTICULES DANS UNE ZONE DE SURVEILLANCE COMPRENANT UN DISPOSITIF DE DÉTECTION OPTIQUE ET DISPOSITIF DE DÉTECTION

(30) Priorität: 17.10.2018 DE 102018125715
(43) Veröffentlichungstag der Anmeldung: 25.08.2021
(73) Patentinhaber: Valeo Schalter und Sensoren GmbH, 74321 Bietigheim-Bissingen (DE)
(72) Erfinder: TROEGER, Hans-Martin, 96317 Kronach Neuses (DE); QUREISHI, Faraz, 96317 Kronach Neuses (DE); MATHUR, Harsha, 96317 Kronach Neuses (DE)
(74) Vertreter: Pothmann, Karsten
(86) Internationale Anmeldenummer: PCT/EP2019/077925
(87) Internationale Veröffentlichungsnummer: WO 2020/078983

(56) Entgegenhaltungen:
- US-A1- 2018 136 337
- SATAT GUY ET AL: "Towards photography through realistic fog", 2018 IEEE INTERNATIONAL CONFERENCE ON COMPUTATIONAL PHOTOGRAPHY (ICCP), IEEE, 4. Mai 2018 (2018-05-04), Seiten 1-10, XP033352256, DOI: 10.1109/ICCPHOT.2018.8368463 [gefunden am 2018-05-29]

## Beschreibung

### Technisches Gebiet

Die Erfindung betrifft ein Verfahren zur Erfassung wenigstens von Partikelzusammensetzungen in einem Überwachungsbereich eines Fahrzeugs, welche ein zeitlich dynamisches Verhalten aufweisen, mit einer optischen Detektionsvorrichtung des Fahrzeugs, wobei bei dem Verfahren bei wenigstens einer Messung
- optische Sendesignale in den Überwachungsbereich gesendet werden und Sendesignale, welche an Partikelzielen von etwa im Überwachungsbereich vorhandenen Partikelzusammensetzungen reflektiert werden, als Partikel-Reflexionssignale empfangen werden,
- aus den Partikel-Reflexionssignalen auf das Vorhandensein von dynamischen Partikelzusammensetzungen geschlossen wird.

Ferner betrifft die Erfindung eine optische Detektionsvorrichtung zur Erfassung wenigstens von dynamischen Partikelzusammensetzungen in einem Überwachungsbereich,
- mit wenigstens einem Sender, mit welchem optische Sendesignale in den Überwachungsbereich gesendet werden können,
- mit wenigstens einem Empfänger, mit welchem Sendesignale, welche an Partikelzielen von etwa im Überwachungsbereich vorhandenen Partikelzusammensetzungen reflektiert werden als Partikel-Reflexionssignale empfangen werden können,
- mit wenigstens einer Auswerteeinrichtung mit welcher aus den Partikel-Reflexionssignalen oder diese charakterisierenden Größen auf das Vorhandensein von dynamischen Partikelzusammensetzungen geschlossen werden kann.

### Stand der Technik

Aus der DE 10 2009 028 578 A1 ist ein Verfahren für die Umfelderfassung mit mindestens einer LiDAR-Sensorik bekannt, bei dem ein Erfassungsbereich des Umfelds mit einem Abtaststrahl abgetastet wird und an Objekten im Umfeld reflektierte Strahlung erfasst und ausgewertet wird. Die Intensität der zurückgestreuten Strahlung eines Abtaststrahls wird als Funktion der Entfernung erfasst (Intensitätskurve). Weiterhin wird ein Schwellwert für die Amplitude der Intensitätskurve vorgegeben. Auf eine Störung der Ausbreitungsbedingungen wird geschlossen, wenn der vorgegebene Schwellwert wenigstens über ein vorgegebenes Entfernungsintervall überschritten wird. Bei entsprechenden Witterungsbedingungen, wie zum Beispiel Nässe auf der Fahrbahn, spricht die Wahrscheinlichkeit dafür, dass die Störung durch eine Gischtwolke verursacht ist, die durch ein sich bewegendes Objekt aufgewirbelt worden ist.

Die Publikation "Towards photography through realistic fog", SATAT GUY ET AL, 2018 IEEE INTERNATIONAL CONFERENCE ON COMPUTATIONAL PHOTOGRAPHY (ICCP), IEEE, 4. Mai 2018, offenbart, dass Eigenschaften von Nebel im Sichtbereich einer Kamera abgeschätzt werden, und Belichtungszeiten der Kamera an eine Dichte des Nebels angepasst werden. Photographie durch Nebel ist ein wichtiger Aspekt für selbst-fahrende Fahrzeuge.

Aufgabe der Erfindung ist es, ein Verfahren und eine Detektionsvorrichtung der eingangs genannten Art zu gestalten, mit denen eine Bestimmung von Partikelzusammensetzungen, welche im Überwachungsbereich der Detektionsvorrichtung erfasst werden, verbessert werden kann.

### Offenbarung der Erfindung

Diese Aufgabe wird bei dem Verfahren erfindungsgemäß dadurch gelöst, dass
- wenigstens zwei Messungen zeitlich beabstandet durchgeführt werden,
- aus den Partikel-Reflexionssignalen jeder Messung eine Partikelzieldichte oder eine die Partikelzieldichte charakterisierende Größe für wenigstens ein Teilvolumen des Überwachungsbereich ermittelt wird,
- eine Differenz der Partikelzieldichte oder der diese charakterisierende Größe der wenigstens zwei Messungen gebildet wird,
- ein Vergleich der Differenz mit einer vorgegebenen Toleranz vorgenommen wird, und
- falls die Partikelzieldichte oder die diese charakterisierende Größe der wenigstens zwei Messungen sich gegebenenfalls um mehr als die vorgebbare oder vorgegebene Toleranz unterscheiden, darauf geschlossen wird, dass die Partikel-Reflexionssignale aus dem wenigstens einen Teilvolumen von der Reflexion der Sendesignale an dynamischen Partikelzusammensetzungen herrühren.

Erfindungsgemäß wird die zeitliche Entwicklung der Partikelzieldichte in wenigstens einem Teilvolumen des Überwachungsbereichs betrachtet. Aus der zeitlichen Entwicklung der Partikelzieldichte wird geschlossen, ob die erfassten Partikel zu einer Partikelzusammensetzung mit zeitlich dynamischem Verhalten oder zeitlich gleichmäßigem Verhalten gehören.

Bei Partikelzusammensetzungen mit zeitlich gleichmäßigem Verhalten verändert sich die Partikelzieldichte zwischen den Messungen gering oder gar nicht. Bei Partikelzusammensetzungen mit zeitlich dynamischem Verhalten ist eine deutliche Veränderung der Partikelzieldichte zwischen den Messungen erfassbar. Bei der Beurteilung, ob es sich um ein zeitlich dynamisches Verhalten oder ein zeitlich gleichmäßiges Verhalten handelt, können entsprechende Toleranzen bezüglich der Partikelzieldichten berücksichtigt werden, sofern dies gegeben ist.

Vorteilhafterweise kann für das wenigstens eine Teilvolumen eine Partikelzieldichtendifferenz der dortigen Partikelzieldichten oder diese charakterisierenden Größen bei den wenigstens zwei Messungen ermittelt werden. Liegt die Partikelzieldichte unterhalb einer vorgegebenen oder vorgebbaren Grenze, bei der eine entsprechende Toleranz berücksichtigt sein kann, so kann darauf geschlossen werden, dass die Partikel-Reflexionssignale aus dem wenigstens einen Teilvolumen von der Reflexion der Sendesignale an dynamischen Partikelzusammensetzungen herrühren. Andernfalls kann darauf geschlossen werden, dass die Partikel-Reflexionssignale von der Reflexion der Sendesignale an Partikelzusammensetzungen mit zeitlich gleichmäßigem Verhalten herrühren.

Bei den mit der Erfindung erfassbaren Partikelzusammensetzungen kann es sich um Niederschlag, insbesondere Regen, Schnee, Graupel, Hagel, oder dergleichen, oder Gischt, Nebel, Rauch, Smog oder dergleichen handeln. Umfangreiche Untersuchungen auf dem Wege zur Erfindung haben ergeben, dass die Partikelzieldichte bei Gischt, Nebel, Rauch oder Smog ein zeitlich dynamisches Verhalten aufweist. Gischt, Nebel, Rauch und Smog sind also dynamische Partikelzusammensetzungen im Sinne der Erfindung. Demgegenüber weist die Partikelzieldichte bei Niederschlag, insbesondere Regen, Schnee, Hagel, Graupel oder dergleichen, ein zeitlich gleichmäßiges Verhalten auf. Niederschlag, insbesondere Regen, Schnee, Hagel, Graupel oder dergleichen, im Sinne der Erfindung ist also eine Partikelzusammensetzung mit zeitlich gleichmäßigem Verhalten.

Bei Gischt handelt es sich um Wasser, welches vom Boden aufgewirbelt wird. Das Aufwirbeln des Wassers kann insbesondere durch Fahrzeuge und/oder durch starken Wind erfolgen.

Ein Partikelziel ist eine Stelle an der Oberfläche eines Partikels, an dem optische Sendesignale reflektiert und als Partikel-Reflexionssignale zurückgesendet werden können. Ein Partikel kann ein oder mehrere derartige Partikelziele aufweisen.

Vorteilhafterweise können mit der Detektionsvorrichtung auch Objekte im Überwachungsbereich erfasst werden. Bei den Objekten kann es sich insbesondere um Fahrzeuge, Personen, Tiere, Hindernisse, Schlaglöcher, Fahrbahnbegrenzungen, wie beispielsweise Leitplanken oder dergleichen, handeln. Zur Erfassung der Objekte können Sendesignale, welche an Objektzielen reflektiert werden, als Objekt-Reflexionssignale erfasst werden. Aus den Objekt-Reflexionssignalen können mit entsprechenden Mitteln Objektinformationen, insbesondere Richtung, Entfernung und/oder Geschwindigkeit eines Objekts relativ zur Detektionsvorrichtung und/oder Eigenschaften des Objekts, ermittelt werden. Ein Objektziel ist eine Stelle an der Oberfläche eines Objekts, an dem optische Sendesignale reflektiert und als Objekt-Reflexionssignale zurückgesendet werden können. Ein Objekt kann ein oder mehrere Objektziele aufweisen.

Vorteilhafterweise kann die optische Detektionsvorrichtung nach einem Lichtlaufzeitverfahren, insbesondere einem Lichtimpulslaufzeitverfahren, arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Sendesignals, insbesondere eines Lichtpulses, mit wenigstens einem Sender und dem Empfang des entsprechenden reflektierten Sendesignals, also des Reflexionssignals, mit wenigstens einem Empfänger gemessen und daraus eine Entfernung zwischen der Detektionsvorrichtung und einem Partikelziel oder einem Objektziel ermittelt.

Vorteilhafterweise kann die optische Detektionsvorrichtung als abtastendes oder scannendes System ausgestaltet sein. Dabei kann mit Sendesignalen ein Überwachungsbereich abgetastet, also abgescannt, werden. Dazu können die entsprechenden Sendesignale bezüglich ihrer Ausbreitungsrichtung über den Überwachungsbereich geschwenkt werden. Hierbei kann wenigstens Umlenkeinrichtung, insbesondere eine Scaneinrichtung, eine Umlenkspiegeleinrichtung oder dergleichen, zum Einsatz kommen.

Vorteilhafterweise kann die optische Detektionsvorrichtung als laserbasiertes Entfernungsmesssystem ausgestaltet sein. Das laserbasierte Entfernungsmesssystem kann als Lichtquelle wenigstens eines Senders wenigstens einen Laser, insbesondere einen Diodenlaser, aufweisen. Mit dem wenigstens einen Laser können insbesondere gepulste Sendesignale gesendet werden. Mit dem Laser können Sendesignale in für das menschliche Auge sichtbaren oder nicht sichtbaren Frequenzbereichen emittiert werden. Entsprechend kann wenigstens ein Empfänger einen für die Frequenz des ausgesendeten Lichtes ausgelegten Detektor, insbesondere eine (Lawinen)fotodiode, ein Dioden-Array, ein CCD-Array oder dergleichen, aufweisen. Das laserbasierte Entfernungsmesssystem kann vorteilhafterweise ein Laserscanner sein. Mit einem Laserscanner kann ein Überwachungsbereich mit einem insbesondere gepulsten Laserstrahl abgetastet werden.

Die Erfindung wird bei einem Fahrzeug, insbesondere einem Kraftfahrzeug, verwendet. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können.

Die Detektionsvorrichtung kann vorteilhafterweise mit wenigstens einer elektronischen Steuervorrichtung eines Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann ein wenigstens teilweise autonomer Betrieb des Fahrzeugs ermöglicht werden.

Insbesondere bei Fahrzeugen ist eine Kenntnis der Fahrbahnbeschaffenheit hilfreich, um das Fahrverhalten insbesondere mithilfe eines Fahrassistenzsystems zu beeinflussen. So wird beispielweise durch eine nasse oder glatte Fahrbahn der zu erwartende Bremsweg deutlich verlängert. Um die Fahrbahnbeschaffenheit besser einschätzen zu können, ist es hilfreich, die mit der Detektionsvorrichtung erfasste Partikelzusammensetzung besser identifizieren zu können. So kann insbesondere aus einer Schätzung der Gischt von vorausfahrenden Fahrzeugen und/oder der Schätzung von aktuellen Niederschlagsmengen zur Beurteilung der Fahrumgebung, insbesondere der Fahrbahnbeschaffenheit, herangezogen werden. Mithilfe der Erfindung können die Partikelzusammensetzungen besser unterschieden werden. So kann insbesondere Gischt von Niederschlag unterschieden werden. Insgesamt kann so eine Fahrsicherheit verbessert werden.

Bei einer vorteilhaften Ausgestaltung des Verfahrens kann, falls die bei den wenigstens zwei Messungen ermittelten Partikelzieldichten oder diese charakterisierenden Größen gegebenenfalls innerhalb einer vorgebbaren oder vorgegebenen Toleranz übereinstimmen, darauf geschlossen werden, dass die Partikel-Reflexionssignale aus der Reflexion der Sendesignale an Partikelzusammensetzungen mit zeitlich gleichmäßigem Verhalten herrühren. Auf diese Weise kann insbesondere Gischt von Niederschlägen, insbesondere Regen, Schnee, Hagel oder Graupel, unterschieden werden

Bei einer weiteren vorteilhaften Ausgestaltung des Verfahrens kann zur Ermittlung der Partikelzieldichten oder diese charakterisierenden Größen eine Anzahl von bei den Messungen erfassten Partikeln bezüglich eines vorgegebenen Teilvolumens des Überwachungsbereichs normiert werden. Die normierten Partikelzieldichten oder die diese charakterisierenden Größen der Messungen können so direkt miteinander verglichen werden.

Bei einer weiteren vorteilhaften Ausgestaltung des Verfahrens kann wenigstens ein Teil des Überwachungsbereichs in vorgegebene Teilvolumen unterteilt werden und die Partikelzieldichten oder diese charakterisierenden Größen können für die Teilvolumen jeweils getrennt ermittelt werden. Auf diese Weise kann ein entsprechender Teil des Überwachungsbereichs ortsaufgelöst auf entsprechende Partikelzusammensetzungen überprüft werden. Dabei können in den Teilvolumen jeweils unterschiedliche Partikelzusammensetzungen erfasst werden. So können beispielsweise in einem Teilvolumen hauptsächlich Niederschläge erfasst werden, welche ein zeitlich gleichmäßige Partikelzieldichten erzeugen. In einem anderen Teilvolumen kann hauptsächlich Gischt erfasst werden, welche zeitlich dynamische Partikelzieldichten erzeugt.

Bei einer weiteren vorteilhaften Ausgestaltung des Verfahrens kann wenigstens ein Teil des Überwachungsbereichs einem virtuellen Gitter zugeordnet werden, wobei die Gitterzellen des Gitters Teilvolumen des Überwachungsbereichs repräsentieren. Auf diese Weise kann eine reproduzierbare räumliche Zuteilung erfolgen. Die Zuteilung des Überwachungsbereichs auf die entsprechenden Gitter kann nach einer Klassifizierung der Reflexionssignale erfolgen.

Vorteilhafterweise kann das virtuelle Gitter als Flächengitter oder Raumgitter vorgegeben werden. Vorteilhafterweise kann das virtuelle Gitter auf einem kartesischen Koordinatensystem, einem Polar-Koordinatensystem oder ein andersartiges Koordinatensystem basieren.

Bei einer weiteren vorteilhaften Ausgestaltung des Verfahrens können die Reflexionssignale aus dem Überwachungsbereich zumindest als Partikel-Reflexionssignale und als Objekt-Reflexionssignale, welche von Objekten im Überwachungsbereich herrühren, klassifiziert werden. Auf diese Weise können Objekte von Partikeln unterschieden werden. So kann ermittelt werden, in welchem Teil des Überwachungsbereichs Objekte vorhanden sind.

Bei einer weiteren vorteilhaften Ausgestaltung des Verfahrens kann eine Partikelzieldichte oder diese charakterisierende Größe für wenigstens ein Teilvolumen des Überwachungsbereichs ermittelt werden, welches sich in einem Freiraum des Überwachungsbereichs befindet, aus dem keine Objekt-Reflexionssignale erfasst werden, welche aus Reflexionen von optischen Sendesignalen an Objekten herrühren. Im Freiraum des Überwachungsbereichs wird die Sichtweite der Detektionsvorrichtung nicht durch etwaige Objekte beschränkt. Besagter Freiraum wird in Fachkreisen auch als "Free-Space" oder "Visible-Space" bezeichnet.

Vorteilhafterweise kann Überprüfung der Partikelzieldichte auf Entfernungen etwa zwischen 2 m und 20 m von der Detektionsvorrichtung beschränkt werden. Auf diese Weise kann die Datenmenge verringert und so die Bearbeitungszeit verkürzt werden.

Bei einer weiteren vorteilhaften Ausgestaltung des Verfahrens kann bei der wenigstens einen Messung der Überwachungsbereich mit den Sendesignalen abgetastet werden. Auf diese Weise kann der Überwachungsbereich ortsaufgelöst auf Partikel und/oder Objekte hin überprüft werden.

Bei einer weiteren vorteilhaften Ausgestaltung des Verfahrens können Partikel-Reflexionssignale und gegebenenfalls Objekt-Reflexionssignale empfangen und in entsprechende elektrische Signale umgewandelt werden, welche entsprechend weiterverarbeitet werden können. Auf diese Weise kann die Auswertung der optischen Reflexionssignale nach Umwandlung in elektrische Signale auf elektrischem Wege insbesondere mithilfe von elektronischen und/oder elektrischen Bauteilen erfolgen.

Bei einer weiteren vorteilhaften Ausgestaltung des Verfahrens kann
- für mehrere Teilvolumen jeweils eine Partikelzieldichtendifferenz der dortigen Partikelzieldichten oder diese charakterisierenden Größen bei mehreren Messungen ermittelt werden,
- aus den Partikelzieldichtendifferenzen der betreffenden Teilvolumen kann eine stochastische Varianz gebildet werden,
- die Varianz kann mit einem vorgegebenen oder vorgebbaren Schwellwert verglichen werden,
- falls die Varianz größer ist als der Schwellwert, kann darauf geschlossen werden, dass die Partikel-Reflexionssignale aus den mehreren Teilvolumen vorwiegend von Partikelzusammensetzungen mit zeitlich dynamischem Verhalten herrühren,
- andernfalls kann darauf geschlossen werden, dass die Partikel-Reflexionssignale aus den mehreren Teilvolumen vorwiegend von Partikelzusammensetzungen mit zeitlich gleichmäßigem Verhalten herrühren. Auf diese Weise kann ermittelt werden, welche Art von Partikelzusammensetzungen in dem Überwachungsbereich überwiegt.

Ferner wird die Aufgabe erfindungsgemäß bei der optischen Detektionsvorrichtung dadurch gelöst, dass die Detektionsvorrichtung Mittel aufweist zur Durchführung des erfindungsgemäßen Verfahrens.

Bei einer vorteilhaften Ausführungsform kann die Detektionsvorrichtung Mittel zum Abtasten des Überwachungsbereichs mithilfe der Sendesignale aufweisen. Auf diese Weise kann der Überwachungsbereich ortsaufgelöst auf Partikel und/oder Objekte hin überwacht werden.

Vorteilhafterweise kann die Detektionsvorrichtung wenigstens eine Umlenkeinrichtung aufweisen, mit welcher die Sendesignale umgelenkt, insbesondere deren Richtung geschwenkt, werden kann, um den Überwachungsbereich abzutasten. Diese oder eine andere Umlenkeinrichtung kann geeignet sein, um die Reflexionssignale aus dem Überwachungsbereich zu wenigstens einem Empfänger der Detektionsvorrichtung umzulenken.

Im Übrigen gelten die im Zusammenhang mit dem erfindungsgemäßen Verfahren und der erfindungsgemäßen Detektionsvorrichtung und deren jeweiligen vorteilhaften Ausgestaltungen und Ausführungsformen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Fahrzeug in der Vorderansicht, mit einem Laserscanner zur Überwachung eines Überwachungsbereichs in Fahrtrichtung vor dem Fahrzeug, welcher mit einem Fahrerassistenzsystem des Fahrzeugs verbunden ist;
- Figur 2: eine Funktionsdarstellung des Fahrzeugs mit dem Laserscanner und dem Fahrerassistenzsystem aus der Figur 1;
- Figur 3: eine Draufsicht auf das Fahrzeug aus der Figur 1 in einer Fahrsituation auf einer Straße bei Regen bei einer Messung mit dem Laserscanner, wobei sich im Überwachungsbereich zwei weitere Fahrzeuge befinden, welche Gischt erzeugen, und wobei der Überwachungsbereich einem virtuellen Gitter zugeordnet ist und in den Gitterzellen jeweilige Partikelzieldichten angegeben sind;
- Figur 4: die Draufsicht auf das Fahrzeug aus der Figur 3 bei einer späteren Messung;
- Figur 5: die Draufsicht aus den Figuren 3 und 4, wobei in den Gitterzellen die jeweiligen Differenzen der Partikelzieldichten zwischen den beiden Messungen aus den Figuren 3 und 4 angegeben sind;
- Figur 6: die Draufsicht aus der Figur 5, wobei die jeweiligen Gitterzellen entsprechend der Differenzen der Partikelzieldichten aus der Figur 5 als vorwiegend Regen "R" oder vorwiegend Gischt "G" enthaltend markiert sind.

In den Figuren sind gleiche Bauteile mit gleichen Bezugszeichen versehen.

### Ausführungsform(en) der Erfindung

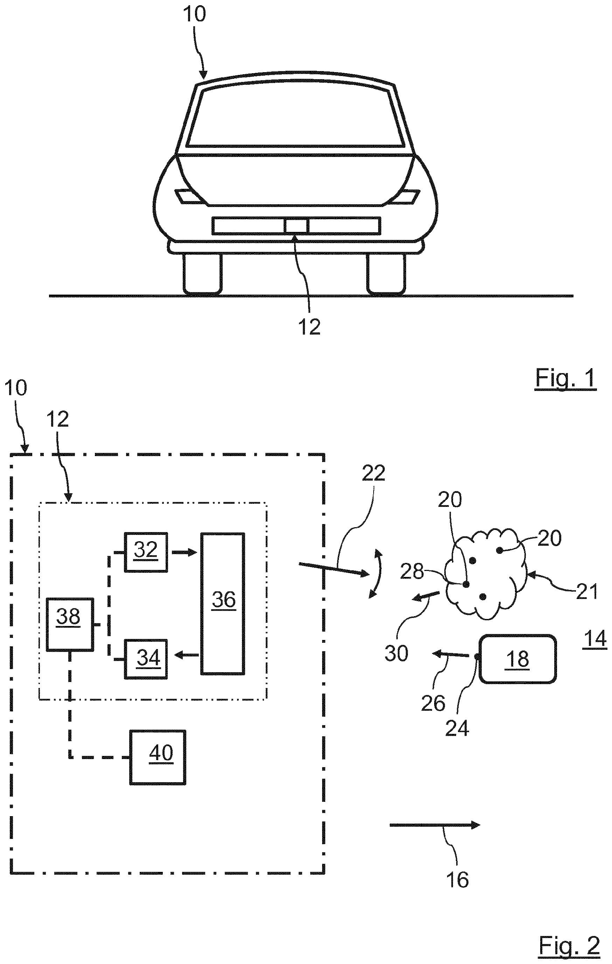

In der Figur 1 ist ein Fahrzeug 10 beispielhaft in Form eines Personenkraftwagens in der Vorderansicht gezeigt. Das Fahrzeug 10 umfasst eine abtastende optische Detektionsvorrichtung beispielhaft in Form eines Laserscanners 12. Der Laserscanner 12 ist beispielhaft in der vorderen Stoßstange des Fahrzeugs 10 angeordnet. Die Figur 2 zeigt einige Teile, beispielsweise den Laserscanner 12, des Fahrzeugs 10 als Funktionsdarstellung.

Mit dem Laserscanner 12 kann ein Überwachungsbereich 14 in Fahrtrichtung 16 vor dem Fahrzeug 10 auf Objekte 18 und Partikel 20 hin überwacht werden. Hierzu kann mit dem Laserscanner 12 der Überwachungsbereich 14 mit entsprechenden optischen Sendesignalen 22 abgetastet werden.

Bei Objekten 18 kann es sich um andere Fahrzeuge, Personen, Tiere, Hindernisse, Schlaglöcher, Fahrbahnbegrenzungen, die Fahrbahnoberfläche oder dergleichen handeln.

Die Partikel 20 treten als Partikelzusammensetzung 21 in Form von Niederschlag, beispielsweise Regen, Schnee, Hagel, Graupel oder dergleichen, oder in Form von Gischt, Nebel, Smog, Rauch oder dergleichen, auf. Bei dem Partikeln 20 kann es sich dementsprechend um Regentropfen, Wassertropfen, Nebeltropfen, Hagelkörner, Schneeflocken, Rauchpartikel, Smogpartikel, Staubpartikel, Sandkörner oder dergleichen handeln.

Bei Vorhandensein eines Objekts 18 in dem Überwachungsbereich 14 werden die entsprechenden Sendesignale 22 an Objektzielen 24 des Objekts 18 als Objekt-Reflexionssignale 26 reflektiert und zu dem Laserscanner 12 zurückgesendet. Bei einem Objektziel 24 handelt es sich um einen Bereich der Oberfläche eines Objekts 18, an dem Sendesignale 22 reflektiert werden können. Jedes Objekt 18 kann einen oder mehrere solcher Objektziele 24 aufweisen, die mit den Sendesignalen 22 erfasst werden können.

Bei Vorhandensein von Partikeln 20 in dem Überwachungsbereich 14 werden die entsprechenden Sendesignale 22 an Partikelzielen 28 der Partikel 20 als Partikel-Reflexionssignale 30 reflektiert und zu dem Laserscanner 12 zurückgesendet. Bei einem Partikelziel 28 sich handelt es sich um einen Bereich der Oberfläche eines Partikels 20, und dem Sendesignale 22 reflektiert werden können. Jeder Partikel 20 kann ein oder mehrere solcher Partikelziele 28 aufweisen, die mit den Sendesignalen 22 erfasst werden können.

Der Laserscanner 12 arbeitet nach einem sogenannten Laufzeitverfahren, bei dem eine Laufzeit zwischen dem Aussenden eines Sendesignals 22 und dem Empfang eines Objekt-Reflexionssignals 26 erfasst und daraus eine Entfernung, eine Geschwindigkeit und/oder eine Richtung des Objekts 18 relativ zum Fahrzeug 10 bestimmt werden kann. Entsprechend kann bei dem Empfang eines Partikel-Reflexionssignals 30 eine Entfernung, eine Geschwindigkeit und/oder eine Richtung des Partikels 20 relativ zum Fahrzeug 10 bestimmt werden. Aus der Entfernung und der Richtung eines Objekts 18 oder eines Partikels 20 kann die jeweilige Position bestimmt werden.

Der Laserscanner 12 weist einen Sender 32 zum Aussenden der Sendesignale 22, einen Empfänger 34 zum Empfangen der Objekt-Reflexionssignale 26 und der Partikel-Reflexionssignale 30, eine Umlenkeinrichtung 36, beispielsweise in Form einer Umlenkspiegeleinrichtung, zum Umlenken der Sendesignale 22, der Objekt-Reflexionssignale 26 und der Partikel-Reflexionssignale 30 und eine Steuer- und Auswerteeinrichtung 38 zur Steuerung des Senders 32, des Empfängers 34 und der Umlenkeinrichtung 36 und zur Auswertung von empfangenen Objekt-Reflexionssignale 26 und Partikel-Reflexionssignale 30 auf.

Der Sender 32 weist beispielsweise eine Laserdiode auf, mit der die Sendesignale 22 in Form von Laserpulsen ausgesendet werden.

Mit der Umlenkeinrichtung 36 werden die Strahlrichtungen der Sendesignale 22 in den Überwachungsbereich 14 geschwenkt, sodass der Überwachungsbereich 14 mit den Sendesignalen 22 abgetastet werden kann. Ferner werden mit der Umlenkeinrichtung 36 die zurückkommenden Objekt-Reflexionssignale 26 und Partikel-Reflexionssignale 30 auf den Empfänger 34 gelenkt.

Der Empfänger 34 weist ein optoelektronisches Bauteil, beispielsweise eine Photodiode, einen CCD-Chip oder dergleichen, auf, mit dem die optischen Objekt-Reflexionssignale 26 und die Partikel-Reflexionssignale 30 in entsprechende elektrische Signale umgewandelt werden können. Die elektrischen Signale können mit der Steuer- und Auswerteeinrichtung 38 entsprechend verarbeitet werden.

Der Laserscanner 12, respektive die Steuer- und Auswerteeinrichtung 38, ist funktional mit einem Fahrerassistenzsystem 40 verbunden. Mit dem Fahrerassistenzsystem 40 können Fahrfunktionen des Fahrzeugs 10, beispielsweise eine Lenkung, Bremsen, ein Motor oder dergleichen gesteuert oder deren Steuerung oder ein Fahrer des Fahrzeugs 10 zumindest unterstützt werden. Mithilfe des Fahrerassistenzsystems 40 kann das Fahrzeug 10 autonom oder teilautonom betrieben werden.

Beim Betrieb des Laserscanners 12 wird mit der Steuer- und Auswerteeinrichtung 38 der Sender 32 so angesteuert, dass mit diesem Sendesignale 22 in Form von Laserpulsen ausgesendet werden. Die Sendesignale 22 werden mit der Umlenkeinrichtung 36 in den Überwachungsbereich 14 umgelenkt. Dabei wird die Senderichtung der Sendesignale 22 auf der Auslassseite der Umlenkeinrichtung 36 in eine Richtung, beispielhaft in horizontaler Richtung, geschwenkt, sodass der Überwachungsbereich 14 mit nacheinander folgenden Sendesignalen 22 abgetastet wird. Auf diese Weise kann der Azimut eines erfassten Objektes 18 oder eines erfassten Partikels 20 bestimmt werden. Optional kann die Senderichtung der Sendesignale 22 mit der Umlenkeinrichtung 36 zusätzlich in einer weiteren, bevorzugt orthogonalen, Richtung geschwenkt werden, sodass der Überwachungsbereich 14 entsprechend auch in diese Richtung abgetastet werden kann. Auf diese Weise kann zusätzlich die Elevation des Objekts 18 oder des Partikels 20 bestimmt werden.

Bei einer Messung mit dem Laserscanner 12, welche auch als Scan bezeichnet werden kann, wird der den Überwachungsbereich 14 definierende Sichtwinkel einmal vollständig abgetastet. Beim Betrieb des Laserscanners 12 werden nacheinander mehrere Messungen durchgeführt, sodass der Überwachungsbereich 14 zu unterschiedlichen Zeitpunkten jeweils vollständig abgetastet werden kann.

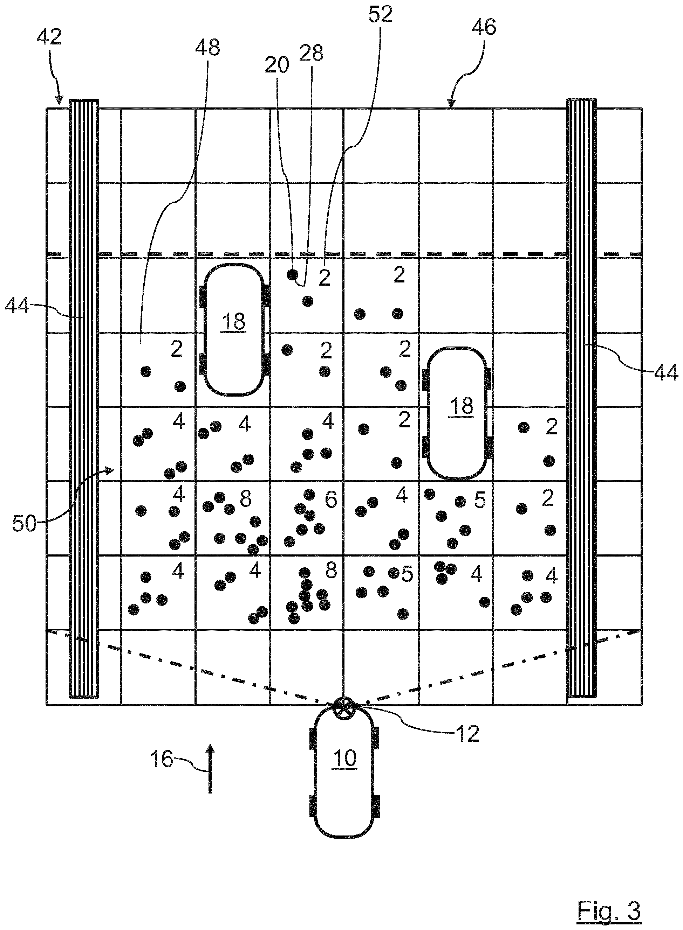

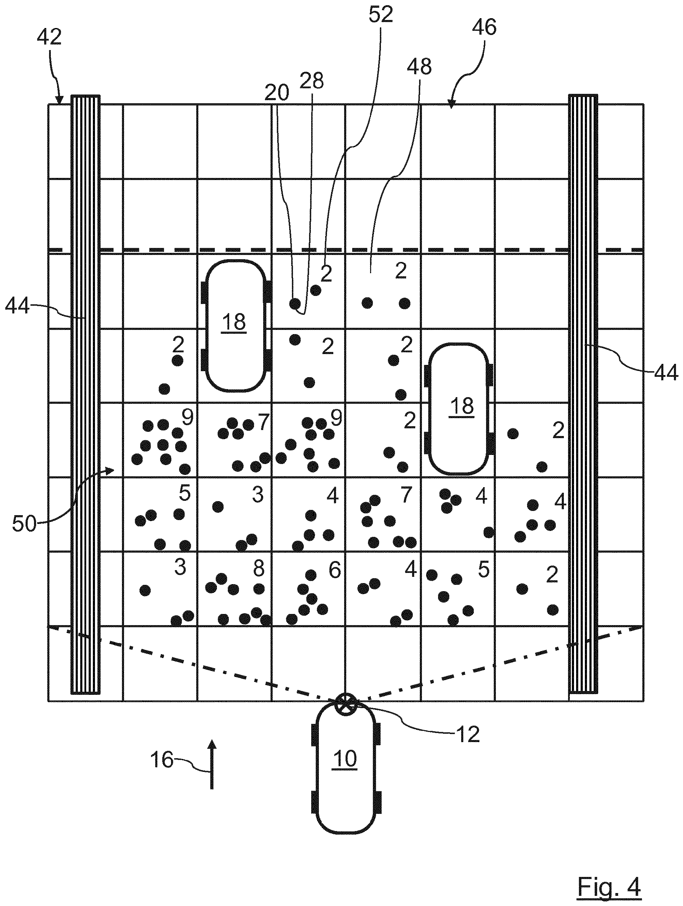

In den Figuren 3 und 4 ist eine Fahrsituation des Fahrzeugs 10 bei nacheinander folgenden Messungen mit dem Laserscanner 12 gezeigt. Das Fahrzeug 10 befindet sich auf einer Straße 42, welche in Fahrtrichtung 16 rechts und links durch Leitplanken 44 begrenzt ist. Die Leitplanken 44 und die Fahrbahnoberfläche sind Objekte 18 im Sinne der Erfindung. In Fahrtrichtung 16 vor dem Fahrzeug 10 befinden sich zwei Objekte 18 in Form von weiteren Fahrzeugen. Während der Fahrsituation herrscht Regen. Durch die vorausfahrenden Objekte 18, nämlich die Fahrzeuge, wird das Wasser auf der Straße aufgewirbelt und erscheint als Gischt. Die Regentropfen des Niederschlags und die Wassertropfen der Gischt sind als Partikel 20 in Form von Punkten angedeutet. Der einfacheren Verständlichkeit wegen weisen in dem beschriebenen Ausführungsbeispiel jedes Objekt 18 beispielhaft nur ein Objektziel 24 und jeder Partikel 20 nur ein Partikelziel 28 auf.

In den Figuren 3 bis 6 ist darüber hinaus ein virtuelles Gitter 46 auf Basis eines kartesischen Koordinatensystems gezeigt, welchem der Überwachungsbereich 14 zugeordnet ist. Alternativ kann auch ein Flächengitter beispielsweise auf Basis von Polarkoordinaten verwendet werden. Das Gitter 46 teilt den Überwachungsbereich 14 in Teilvolumen 48, welche durch die Gitterzellen des Gitter 46 definiert werden. Die Zuordnung des Überwachungsbereichs 14 zu dem Gitter 46 erfolgt, wie weiter unten noch erläutert wird, in der Steuer- und Auswerteeinrichtung 38.

Bei den jeweiligen Messungen werden mit dem Empfänger 34 die Objekt-Reflexionssignale 26 der Objekte 18 und die Partikel-Reflexionssignale 30 der Partikel 20 empfangen und in entsprechende elektrische Signale umgewandelt.

Mit der Steuer- und Auswerteeinrichtung 38 werden die entsprechenden elektrischen Signale ausgewertet. Der einfacheren Verständlichkeit wegen werden auch bei der Beschreibung der Verarbeitung der elektrischen Signale mit der Steuer- und Auswerteeinrichtung 38 die Bezeichnungen "Objekt-Reflexionssignale 26", "Partikel-Reflexionssignal 30", "Partikelzieldichten 52" und "Partikelzieldichtendifferenz 54" verwendet, wenngleich hier die entsprechenden elektrischen Signale als jeweils charakterisierende Größen gemeint sind.

Bei der Auswertung wird eine Klassifizierung der mit dem Empfänger 34 empfangenen Reflexionssignale durchgeführt. Dabei werden die Reflexionssignale, welche von Objekten 18 herrühren als Objekt-Reflexionssignale 26 klassifiziert. Die Reflexionssignale, die von Partikeln 20 herrühren, werden als Partikel-Reflexionssignale 30 klassifiziert. Aus den Objekt-Reflexionssignale 26 werden die Positionen der Objekte 18, nämlich der vorausfahrenden Fahrzeuge, der Leitplanken 44 und der Fahrbahnoberfläche, ermittelt.

Im Folgenden werden Verfahrensschritte zur Erfassung der Partikelzusammensetzungen 21 beschrieben, mit dem Regen von Gischt unterschieden werden kann.

Aus den Positionen der Objekte 18 wird ein Freiraum 50 ermittelt. Der Freiraum 50 ist der Bereich im Überwachungsbereich 14, der von dem Laserscanner 12 aus betrachtet nicht durch Objekte 18 abgeschattet oder blockiert wird, so dass die Sendesignale 22 ungehindert passieren können. Der Freiraum 50 wird außerdem auf Entfernungen beispielhaft zwischen 2 m und 20 m zu dem Laserscanner 12 beschränkt. Die Entfernung von 20 m ist in den Figuren 3 bis 6 durch eine gestrichelte Linie angedeutet. In diesen Entfernungen ist es von Interesse, Regen von Gischt zu unterscheiden, um daraus auf die Straßenbeschaffenheit folgern zu können. Die Straßenbeschaffenheit wirkt sich auf einen zu erwartenden Bremsweg aus. Durch die Beschränkung der Untersuchung der etwa vorhandenen Partikelzusammensetzungen 21 auf den Freiraum 50 kann ein Aufwand, beispielsweise ein Rechenaufwand und ein Zeitaufwand, bei der Durchführung des Verfahrens verringert werden.

Für jedes Teilvolumen 48 im Freiraum 50 wird die Anzahl der entsprechenden Partikel-Reflexionssignale 30 bestimmt. Die Anzahl der Partikel-Reflexionssignale 30 wird auf das Teilvolumen 48 normiert und so eine normierte Partikelzieldichte 52 für jedes Teilvolumen 48 ermittelt. In den Figuren 3 und 4 sind die jeweiligen Partikelzieldichten 52 mit Ziffern, beispielhaft zwischen 2 und 8, angegeben.

Umfangreiche Untersuchungen haben ergeben, dass Partikelzusammensetzungen 21 in Form von Gischt ein zeitlich dynamisches Verhalten aufweisen. Demgegenüber weisen Partikelzusammensetzungen 21 in Form von Regen ein im Vergleich zur Gischt zeitlich gleichmäßiges Verhalten auf. In Teilvolumen 48, in denen Gischt vorherrscht, verändert sich die entsprechend Partikelzieldichte 52 zwischen den Messungen. In Teilvolumen 48, in denen Regen vorherrscht, sind die Partikelzahldichten 52 bei den Messungen gleichmäßig, beispielhaft konstant. Bei der Beurteilung, ob es sich um ein zeitlich dynamisches Verhalten oder ein zeitlich gleichmäßiges Verhalten handelt, können entsprechende Toleranzen bezüglich der Partikelzieldichten 52 berücksichtigt werden.

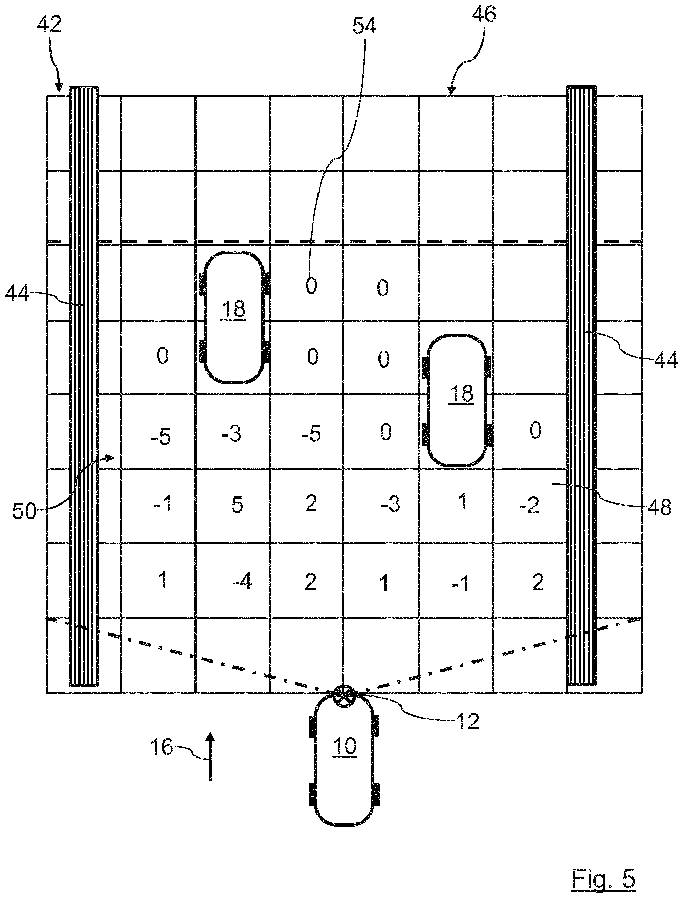

Um zu ermitteln, in welchen Teilvolumen 48 Gischt vorherrscht und in welchen Teilvolumen 48 Regen vorherrscht, wird für jedes Teilvolumen 48 die Partikelzieldichtendifferenz 54 der entsprechenden Partikelzieldichten 52 der beiden Messungen aus der Figur 3 und der Figur 4 gebildet. Das Ergebnis ist in der Figur 5 gezeigt. Für die Teilvolumen 48, in denen Regen vorherrscht, ist beispielhaft die Partikelzieldichtendifferenz 54 gleich 0. Für die Teilvolumen 48, in denen Gischt vorherrscht, bewegt sich die Partikelzieldichtendifferenz 54 beispielsweise zwischen 1 und 5 und zwischen -1 und -5.

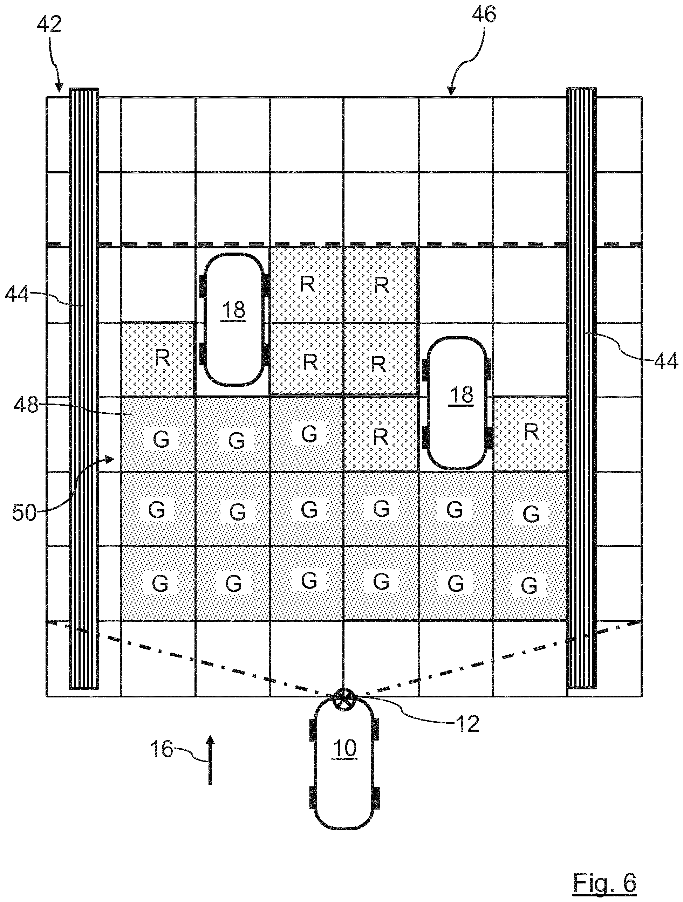

Auf Basis der Partikelzieldichtendifferenzen 54 werden die Teilvolumen 48 im virtuellen Gitter 46, wie in der Figur 6 gezeigt, markiert. Dort sind Teilvolumen 48, in denen Regen vorherrscht, mit "R" und Teilvolumen 48, in denen Gischt vorherrscht, mit "G" gekennzeichnet. Das Gitter 46 mit den entsprechend gekennzeichneten Teilvolumen 48 dient für das Fahrassistenzsystem 40 als Information über die Straßenbeschaffenheit und den daraus resultierenden Einfluss auf den zu erwartenden Bremsweg.

Ferner wird optional ermittelt, ob in dem Freiraum 50 insgesamt vorwiegend Regen oder vorwiegend Gischt vorherrscht.

Hierzu wird für die Teilvolumen 48 im Freiraum 50 jeweils eine jeweilige Partikelzieldichtendifferenz 54 bei mehreren Messungen ermittelt. Aus den Partikelzieldichtendifferenzen 54 wird eine stochastische Varianz gebildet. Die Varianz wird mit einem vorgegebenen Schwellwert verglichen. Der Schwellwert kann beispielsweise initial bei einer Kalibrierung des Laserscanners 12 ermittelt und in einem entsprechenden Speichermedium beispielsweise der Steuer- und Auswerteeinrichtung 38 hinterlegt werden.

Falls die Varianz größer ist als der Schwellwert wird darauf geschlossen, dass die Partikel-Reflexionssignale 30 aus den betreffenden Teilvolumen 48 vorwiegend von Partikelzusammensetzungen 21 mit zeitlich dynamischem Verhalten, in dem vorliegenden Beispiel also Gischt, herrühren. Andernfalls wird darauf geschlossen, dass die betreffenden Partikel-Reflexionssignale 30 vorwiegend von Partikelzusammensetzungen 21 mit zeitlich gleichmäßigen Verhalten, vorliegend also Regen, herrühren.

Diese Information wird zusätzlich dem Fahrassistenzsystem 40 zugeleitet, um die Fahrsicherheit weiter zu verbessern.

## Patentansprüche

1. Verfahren zur Erfassung wenigstens von Partikelzusammensetzungen (21) in einem Überwachungsbereich (14) eines Fahrzeugs (10), welche ein zeitlich dynamisches Verhalten aufweisen, mit einer optischen Detektionsvorrichtung (12) des Fahrzeugs (10), wobei bei dem Verfahren bei wenigstens einer Messung
- optische Sendesignale (22) in den Überwachungsbereich (14) gesendet werden und Sendesignale (22), welche an Partikelzielen (28) von etwa im Überwachungsbereich (14) vorhandenen Partikelzusammensetzungen (21) reflektiert werden, als Partikel-Reflexionssignale (30) empfangen werden,
- aus den Partikel-Reflexionssignalen (30) auf das Vorhandensein von dynamischen Partikelzusammensetzungen (21) geschlossen wird, wobei
- wenigstens zwei Messungen zeitlich beabstandet durchgeführt werden,
- aus den Partikel-Reflexionssignalen (30) jeder Messung eine Partikelzieldichte (52) oder eine die Partikelzieldichte (52) charakterisierende Größe für wenigstens ein Teilvolumen (48) des Überwachungsbereich (14) ermittelt wird,
- eine Differenz der Partikelzieldichte oder der diese charakterisierende Größe der wenigstens zwei Messungen gebildet wird,
- ein Vergleich der Differenz mit einer vorgegebenen Toleranz vorgenommen wird, und
- falls die Partikelzieldichte (52) oder die diese charakterisierende Größe der wenigstens zwei Messungen sich um mehr als die vorgegebene Toleranz unterscheiden, darauf geschlossen wird, dass die Partikel-Reflexionssignale (30) aus dem wenigstens einen Teilvolumen (48) von der Reflexion der Sendesignale (22) an dynamischen Partikelzusammensetzungen (21) herrühren.

2. Verfahren nach Anspruch 1, **dadurch gekennzeichnet, dass** falls die bei den wenigstens zwei Messungen ermittelten Partikelzieldichten (52) oder diese charakterisierenden Größen innerhalb einer vorgegebenen Toleranz übereinstimmen, darauf geschlossen wird, dass die Partikel-Reflexionssignale (30) aus der Reflexion der Sendesignale (22) an Partikelzusammensetzungen (21) mit zeitlich gleichmäßigem Verhalten herrühren.

3. Verfahren nach Anspruch 1 oder 2, **dadurch gekennzeichnet, dass** zur Ermittlung der Partikelzieldichten (52) oder diese charakterisierenden Größen eine Anzahl von bei den Messungen erfassten Partikeln (20) bezüglich eines vorgegebenen Teilvolumens (48) des Überwachungsbereichs (14) normiert wird.

4. Verfahren nach einem der vorigen Ansprüche, **dadurch gekennzeichnet, dass** wenigstens ein Teil des Überwachungsbereichs (14) in vorgegebene Teilvolumen (48) unterteilt wird und die Partikelzieldichten (52) oder diese charakterisierenden Größen für die Teilvolumen (48) jeweils getrennt ermittelt werden.

5. Verfahren nach einem der vorigen Ansprüche, **dadurch gekennzeichnet, dass** wenigstens ein Teil des Überwachungsbereichs (14) einem virtuellen Gitter (46) zugeordnet wird, wobei die Gitterzellen des Gitters (46) Teilvolumen (48) des Überwachungsbereichs (14) repräsentieren.

6. Verfahren nach einem der vorigen Ansprüche, **dadurch gekennzeichnet, dass** die Reflexionssignale aus dem Überwachungsbereich (14) zumindest als Partikel-Reflexionssignale (30) und als Objekt-Reflexionssignale (26), welche von Objekten (18) im Überwachungsbereich (14) herrühren, klassifiziert werden.

7. Verfahren nach einem der vorigen Ansprüche, **dadurch gekennzeichnet, dass** eine Partikelzieldichte (52) oder diese charakterisierende Größe für wenigstens ein Teilvolumen (48) des Überwachungsbereichs (14) ermittelt wird, welches sich in einem Freiraum (50) des Überwachungsbereichs (14) befindet, aus dem keine Objekt-Reflexionssignale (26) erfasst werden, welche aus Reflexionen von optischen Sendesignalen (22) an Objekten (18) herrühren.

8. Verfahren nach einem der vorigen Ansprüche, **dadurch gekennzeichnet, dass** bei der wenigstens einen Messung der Überwachungsbereich (14) mit den Sendesignalen (22) abgetastet wird.

9. Verfahren nach einem der vorigen Ansprüche, **dadurch gekennzeichnet, dass** Partikel-Reflexionssignale (30) und gegebenenfalls Objekt-Reflexionssignale (26) empfangen und in entsprechende elektrische Signale umgewandelt werden, welche entsprechend weiterverarbeitet werden können.

10. Verfahren nach einem der vorigen Ansprüche, **dadurch gekennzeichnet, dass**
- für mehrere Teilvolumen (48) jeweils eine Partikelzieldichtendifferenz (54) der dortigen Partikelzieldichten (52) oder diese charakterisierenden Größen bei mehreren Messungen ermittelt werden,
- aus den Partikelzieldichtendifferenzen (54) der betreffenden Teilvolumen (48) kann eine stochastische Varianz gebildet werden,
- die Varianz kann mit einem vorgegebenen oder vorgebbaren Schwellwert verglichen werden,
- falls die Varianz größer ist als der Schwellwert, darauf geschlossen wird, dass die Partikel-Reflexionssignale (30) aus den mehreren Teilvolumen (48) vorwiegend von Partikelzusammensetzungen (21) mit zeitlich dynamischem Verhalten herrühren,
- andernfalls kann darauf geschlossen wird, dass die Partikel-Reflexionssignale (30) aus den mehreren Teilvolumen (48) vorwiegend von Partikelzusammensetzungen (21) mit zeitlich gleichmäßigem Verhalten herrühren.

11. Optische Detektionsvorrichtung (12) für ein Fahrzeug (10) zur Erfassung wenigstens von dynamischen Partikelzusammensetzungen (21) in einem Überwachungsbereich (14) des Fahrzeugs (10),
- mit wenigstens einem Sender (32), mit welchem optische Sendesignale (22) in den Überwachungsbereich (14) gesendet werden können,
- mit wenigstens einem Empfänger (34), mit welchem Sendesignale (22), welche an Partikelzielen (28) von etwa im Überwachungsbereich (14) vorhandenen Partikelzusammensetzungen (21) reflektiert werden als Partikel-Reflexionssignale (30) empfangen werden können,
- mit wenigstens einer Auswerteeinrichtung (38) mit welcher aus den Partikel-Reflexionssignalen (30) oder diese charakterisierenden Größen auf das Vorhandensein von dynamischen Partikelzusammensetzungen (21) geschlossen werden kann, wobei die Detektionsvorrichtung (12) Mittel (38) aufweist zur Durchführung des Verfahrens gemäß einem der vorigen Ansprüche.

12. Detektionsvorrichtung nach Anspruch 11, **dadurch gekennzeichnet, dass** die Detektionsvorrichtung (12) Mittel (36) zum Abtasten des Überwachungsbereichs (14) mithilfe der Sendesignale (22) aufweist.

## Claims

1. Method for capturing at least particle compositions (21) in a monitoring region (14) of a vehicle (10) that exhibit a temporally dynamic behaviour with an optical detection apparatus (12) of the vehicle (10), wherein, in the method, during at least one measurement,
- optical transmission signals (22) are transmitted into the monitoring region (14) and transmission signals (22) that are reflected at particle targets (28) of any particle compositions (21) present in the monitoring region (14) are received as particle reflection signals (30),
- the presence of dynamic particle compositions (21) is concluded from the particle reflection signals (30), wherein
- at least two measurements are performed with a temporal distance,
- a particle target density (52) or a variable characterizing the particle target density (52) is ascertained for at least one partial volume (48) of the monitoring region (14) from the particle reflection signals (30) of each measurement,
- a difference of the particle target density or the variable characterizing it from the at least two measurements is formed,
- the difference is compared with a prescribed tolerance, and
- if the particle target density (52) or the variable characterizing it from the at least two measurements should differ by more than the prescribed tolerance, it is concluded that the particle reflection signals (30) from the at least one partial volume (48) are caused by the reflection of the transmission signals (22) at dynamic particle compositions (21).

2. Method according to Claim 1, **characterized in that**, if the particle target densities (52) ascertained during the at least two measurements or variables characterizing them correspond to one another within a prescribed tolerance, it is concluded that the particle reflection signals (30) are caused by the reflection of the transmission signals (22) at particle compositions (21) having a temporally uniform behaviour.

3. Method according to Claim 1 or 2, **characterized in that**, for ascertaining the particle target densities (52) or variables characterizing them, a number of particles (20) captured during the measurements with respect to a prescribed partial volume (48) of the monitoring region (14) is normalized.

4. Method according to one of the preceding claims, **characterized in that** at least one portion of the monitoring region (14) is divided into prescribed partial volumes (48) and the particle target densities (52) or variables characterizing them are ascertained in each case separately for the partial volumes (48).

5. Method according to one of the preceding claims, **characterized in that** at least one portion of the monitoring region (14) is assigned to a virtual grid (46), wherein the grid cells of the grid (46) represent partial volumes (48) of the monitoring region (14).

6. Method according to one of the preceding claims, **characterized in that** the reflection signals from the monitoring region (14) are classified at least as particle reflection signals (30) and as object reflection signals (26), which are caused by objects (18) in the monitoring region (14).

7. Method according to one of the preceding claims, **characterized in that** a particle target density (52) or variable characterizing the latter is ascertained for at least one partial volume (48) of the monitoring region (14) located in a free space (50) of the monitoring region (14) from which no object reflection signals (26) are captured that are caused by reflections of optical transmission signals (22) at objects (18).

8. Method according to one of the preceding claims, **characterized in that** the monitoring region (14) is scanned with the transmission signals (22) during the at least one measurement.

9. Method according to one of the preceding claims, **characterized in that** particle reflection signals (30) and possibly object reflection signals (26) are received and converted into corresponding electrical signals that can be further processed accordingly.

10. Method according to one of the preceding claims, **characterized in that**
- for a plurality of partial volumes (48), in each case a particle target density difference (54) of the particle target densities (52) existing there or variables characterizing them are ascertained during a plurality of measurements,
- a stochastic variance can be formed from the particle target density differences (54) of the relevant partial volumes (48),
- the variance can be compared with a prescribed or prescribable threshold value,
- if the variance is greater than the threshold value, it is concluded that the particle reflection signals (30) from the plurality of partial volumes (48) are mainly caused by particle compositions (21) having a temporally dynamic behaviour,
- if this is not the case, it can be concluded that the particle reflection signals (30) from the plurality of partial volumes (48) are mainly caused by particle compositions (21) having a temporally uniform behaviour.

11. Optical detection apparatus (12) for a vehicle (10) for capturing at least dynamic particle compositions (21) in a monitoring region (14) of the vehicle (10),
- having at least one transmitter (32) with which optical transmission signals (22) can be transmitted into the monitoring region (14),
- having at least one receiver (34) with which transmission signals (22) that are reflected at particle targets (28) of any particle compositions (21) present in the monitoring region (14) can be received in the form of particle reflection signals (30),
- having at least one evaluation device (38) with which the presence of dynamic particle compositions (21) can be concluded from the particle reflection signals (30) or variables characterizing them, wherein the detection apparatus (12) has means (38) for performing the method according to one of the preceding claims.

12. Detection apparatus according to Claim 11, **characterized in that** the detection apparatus (12) has means (36) for scanning the monitoring region (14) with the aid of the transmission signals (22).

## Revendications

1. Procédé permettant de détecter au moins des compositions de particules (21) dans une zone de surveillance (14) d'un véhicule (10), qui présentent un comportement dynamique dans le temps, comprenant un dispositif de détection optique (12) du véhicule (10), dans lequel, dans le cadre du procédé, lors d'au moins une mesure
- des signaux d'émission optiques (22) sont émis dans la zone de surveillance (14), et des signaux d'émission (22) qui sont réfléchis sur des cibles de particules (28) par des compositions de particules (21) éventuellement présentes dans la zone de surveillance (14) sont reçus comme des signaux de réflexion de particules (30),
- à partir des signaux de réflexion de particules (30), on conclut à la présence de compositions de particules dynamiques (21), dans lequel
- au moins deux mesures sont effectuées de manière espacée dans le temps,
- à partir des signaux de réflexion de particules (30) de chaque mesure, une densité cible de particules (52) ou une grandeur caractérisant la densité cible de particules (52) est établie pour au moins un volume partiel (48) de la zone de surveillance (14),
- une différence de la densité cible de particules, ou de la grandeur qui la caractérise, desdites au moins deux mesures est formée,
- une comparaison de la différence avec une tolérance prédéfinie est effectuée, et
- si les densités cibles de particules (52), ou les grandeurs qui la caractérisent, des au moins deux mesures diffèrent de plus de la tolérance prédéfinie, on conclut que les signaux de réflexion de particules (30) dudit au moins un volume partiel (48) proviennent de la réflexion des signaux d'émission (22) sur des compositions de particules dynamiques (21).

2. Procédé selon la revendication 1, **caractérisé en ce que** si les densités cibles de particules (52) établies lors desdites au moins deux mesures, ou les grandeurs qui les caractérisent, coïncident dans la limite d'une tolérance prédéfinie, on conclut que les signaux de réflexion de particules (30) proviennent de la réflexion des signaux d'émission (22) sur des compositions de particules ayant un comportement homogène dans le temps.

3. Procédé selon la revendication 1 ou 2, **caractérisé en ce que** pour établir les densités cibles de particules (52) ou les grandeurs qui les caractérisent, un nombre de particules (20) détectées lors des mesures est normalisé par rapport à un volume partiel (48) de la zone de surveillance (14).

4. Procédé selon l'une quelconque des revendications précédentes, **caractérisé en ce qu'**au moins une partie de la zone de surveillance (14) est divisée en volumes partiels (48) prédéfinis, et les densités cibles de particules (52) ou les grandeurs qui les caractérisent sont respectivement établies séparément pour les volumes partiels (48).

5. Procédé selon l'une quelconque des revendications précédentes, **caractérisé en ce qu'**au moins une partie de la zone de surveillance (14) est associée à une grille virtuelle (46), dans lequel les cases de la grille (46) représentent des volumes partiels (48) de la zone de surveillance (14).

6. Procédé selon l'une quelconque des revendications précédentes, **caractérisé en ce que** les signaux de réflexion provenant de la zone de surveillance (14) sont classifiés au moins comme des signaux de réflexion de particules (30) et comme des signaux de réflexion d'objet (26) qui proviennent d'objets (18) dans la zone de surveillance (14).

7. Procédé selon l'une quelconque des revendications précédentes, **caractérisé en ce qu'**une densité cible de particules (52), ou une grandeur qui la caractérise, est établie pour au moins un volume partiel (48) de la zone de surveillance (14) qui se trouve dans un espace libre (50) de la zone de surveillance (14) d'où aucun signal de réflexion d'objet (26) provenant de réflexions de signaux d'émission optiques (22) sur des objets (18) n'est détecté.

8. Procédé selon l'une quelconque des revendications précédentes, **caractérisé en ce que** lors de ladite au moins une mesure, la zone de surveillance (14) est balayée par les signaux d'émission (22).

9. Procédé selon l'une quelconque des revendications précédentes, **caractérisé en ce que** les signaux de réflexion de particules (30), et le cas échéant des signaux de réflexion d'objet (26), sont reçus et peuvent être convertis en signaux électriques correspondants qui peuvent être transformés de manière adéquate.

10. Procédé selon l'une quelconque des revendications précédentes, **caractérisé en ce que**
- pour plusieurs volumes partiels (48), respectivement une différence de densité cible de particules (54) des densités cibles de particules (52) à cet endroit, ou des grandeurs qui les caractérisent, est établie lors de plusieurs mesures,
- une variance stochastique peut être formée à partir des différences de densité cible de particules (54) des volumes partiels (48) concernés,
- la variance peut être comparée avec une valeur seuil prédéfinie ou prédéfinissable,
- si la variance est supérieure à la valeur seuil, on conclut que les signaux de réflexion de particules (30) des plusieurs volumes partiels (48) proviennent principalement de compositions de particules (21) ayant un comportement dynamique dans le temps,
- sinon on peut conclure que les signaux de réflexion de particules (30) des plusieurs volumes partiels (48) proviennent principalement de compositions de particules (21) ayant un comportement homogène dans le temps,

11. Dispositif de détection optique (12) pour un véhicule (10) permettant de détecter au moins des compositions de particules dynamiques (21) dans une zone de surveillance (14) du véhicule (10),
- comprenant au moins un émetteur (32) qui permet d'émettre des signaux d'émission optiques dans la zone de surveillance (14),
- comprenant au moins un récepteur (34) qui permet de recevoir des signaux d'émission (22) qui sont réfléchis sur des cibles de particules (28) par des compositions de particules (21) éventuellement présentes dans la zone de surveillance (14) comme des signaux de réflexion de particules (30),
- comprenant au moins un dispositif d'évaluation (38) qui permet de conclure à partir des signaux de réflexion de particules (30) ou des grandeurs qui les caractérisent à la présence de compositions de particules dynamiques (21), dans lequel le dispositif de détection (12) présente des moyens (38) pour exécuter le procédé selon l'une quelconque des revendications précédentes.

12. Dispositif de détection selon la revendication 11, **caractérisé en ce que** le dispositif de détection (12) présente des moyens (36) pour balayer la zone de surveillance (14) à l'aide des signaux d'émission (22).
